# EUROPEAN PATENT APPLICATION

(11) **EP 3 461 093 A1**
(43) Date of publication of application: **27.03.2019**
(21) Application number: 18186802.7
(22) Date of filing: 31.12.2014
(51) Int. Cl.: H04L 27/26, H04B 3/02, H04L 5/00

(54) **SUBCARRIER INFORMATION INDICATING METHOD, APPARATUS, AND SYSTEM**

(62) Divisional of application: 14909486.4
(71) Applicant: Huawei Technologies Co., Ltd., Shenzhen, Guangdong 518129 (CN)
(72) Inventor: YIN, Hui, Shenzhen, Guangdong 518129 (CN); YI, Xilin, Shenzhen, Guangdong 518129 (CN); FU, Rao, Shenzhen, Guangdong 518129 (CN)
(74) Representative: Thun, Clemens

(57) **Abstract**

The present invention provides a subcarrier information indicating method, including: selecting an offset according to a maximum quantity of bits that a subcarrier is capable of carrying, where a difference between the maximum quantity of bits that the subcarrier is capable of carrying and the selected offset is greater than 0 and less than or equal to 15 (201); obtaining a difference obtained by subtracting the offset from a quantity of bits that need to be actually carried by the subcarrier, and if the difference is not less than 0, sending the difference to a peer device as a value b (203); and sending the offset to the peer device, and instructing the peer device to obtain, according to the value b and the offset, the quantity of bits that need to be actually carried by the subcarrier (205). The method can not only be compatible with an existing mode, but also implement a mode of carrying more than 15 bits by a subcarrier. Therefore, a subcarrier carrying capability supported by a device can be used to a maximum extent.

## Description

### TECHNICAL FIELD

The present invention relates to the data communications field, and, specifically, to a subcarrier information indicating method, an apparatus, and a system.

### BACKGROUND

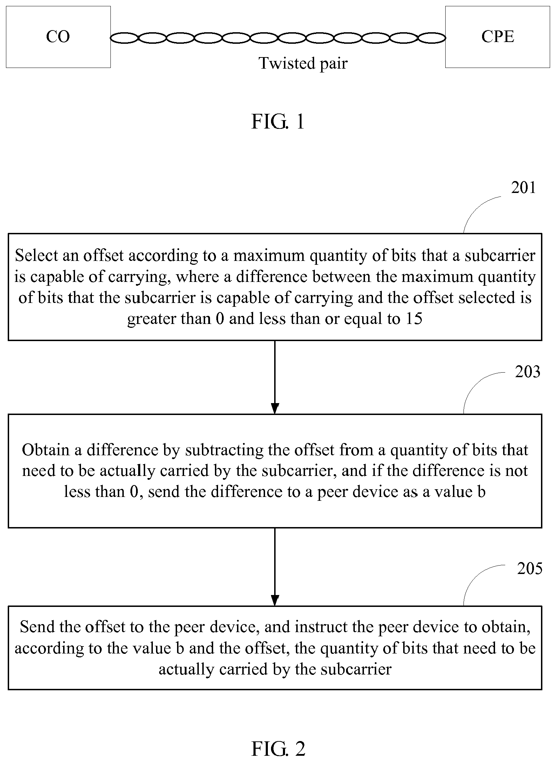

A digital subscriber line (Digital Subscriber Line, DSL for short) is a high-speed data transmission technology that implements transmission on a telephone twisted pair, such as an unshielded twisted pair (Unshielded Twist Pair, UTP for short). Each twisted pair is connected to a customer premises equipment (Customer Premises Equipment, CPE for short) at a remote end, and the other end of the twisted pair is connected to a network side, which is known as a central office (Central Office, CO for short), as shown in FIG. 1. The CO equipment is a network-side device, such as a vectoring control entity (Vectoring Control Entity, VCE for short), a switch, or a cabinet, or may further include a distributed point unit (Distributed Point Unit, DPU for short).

The DSL technology uses frequency division multiplexing (Frequency Division Multiplexing, FDM for short) to create multiple channels in a telephone twisted pair, each channel corresponding to one subcarrier (tone). Before activation of a line, a table b needs to be exchanged between the CO and the CPE, and the table needs to include a quantity of bits carried by each subcarrier. Previously, each subcarrier carries information of a maximum of 15 bits (bit), and a value occupying four bits is used in a standard, that is, a value between 0000 and 1111 (0 to 15) is used to indicate the quantity of bits carried by each subcarrier. The value may be referred to as a value b. For detailed content of the table b, reference may be further made to the ITU-T G.993.2 standard, and details are not further described herein. However, with a growing processing rate of an analog device and a digital device, each subcarrier is capable of carrying more bits (for example, 18 bits), and a value greater than 16 cannot be represented by only four binary bits. If a quantity of bits representing a value b of a subcarrier in a message exchanged between the CO and the CPE is directly changed, it is incompatible with an existing mode that uses only four bits to represent the quantity of bits carried by the subcarrier, and this will directly lead to a line activation failure.

### SUMMARY

Embodiments of the present invention provide a subcarrier information indicating method, an apparatus, and a system, to implement a manner of sending more bits by a subcarrier. According to a first aspect, an embodiment of the present invention provides a subcarrier information indicating method, where the method includes:
selecting an offset according to a maximum quantity of bits that a subcarrier is capable of carrying, where a difference between the maximum quantity of bits that the subcarrier is capable of carrying and the selected offset is greater than 0 and
less than or equal to 15;
obtaining a difference obtained by subtracting the offset from a quantity of bits that need to be actually carried by the subcarrier, and if the difference is not less than 0, sending the difference to a peer device as a value b; and
sending the offset to the peer device, and instructing the peer device to obtain, according to the value b and the offset, the quantity of bits that need to be actually carried by the subcarrier.

In a first possible implementation of the first aspect, the selecting an offset includes: selecting, within a value range less than or equal to the maximum quantity of bits that the subcarrier is capable of carrying, a value as the offset, or obtaining the offset according to a preset mapping table between a maximum quantity of bits that each subcarrier is capable of carrying and an offset.

With reference to the first aspect or the first possible implementation of the first aspect, according to a requirement of the ITU-T G.993.2, four bits are used to represent the value b in a message field used for configuration of a table b.

With reference to the first aspect, the first possible implementation of the first aspect, or the second possible implementation of the first aspect, in a third possible implementation, the subcarrier is a smallest unit carrier for transmitting information on a link connecting to the peer device.

With reference to the first aspect, the first possible implementation of the first aspect, the second possible implementation of the first aspect, or the third possible implementation of the first aspect, in a fourth possible implementation, the sending the offset to the peer device includes: grouping all subcarriers in a transmission direction according to the maximum quantity of bits that the subcarrier is capable of carrying, so as to ensure that subcarriers in each group can use a same offset; and sending group information obtained by grouping all the subcarriers and the offset of each group to the peer device.

With reference to the first aspect, the first possible implementation of the first aspect, the second possible implementation of the first aspect, the third possible implementation of the first aspect, or the fourth possible implementation of the first aspect, in a fifth possible implementation, the offset may be set in an O-PMD or R-PMD message and sent to the peer device.

According to a second aspect, an embodiment of the present invention provides a subcarrier information processing method, where the method includes:
receiving an offset sent by a peer device;
receiving a message including a value b and sent by the peer device, where the value b is a value represented by four bits and indicates a quantity of bits that need to be carried by a subcarrier; and
when it is identified that the value b in the message is not 0, using a sum of the value b and the offset as a quantity of bits that need to be actually carried by the subcarrier, and when it is identified that the value b is 0, using the value b as the quantity of bits that need to be actually carried by the subcarrier.

In a first possible implementation of the second aspect, the method further includes: determining whether the obtained quantity of bits that need to be actually carried by the subcarrier is supported; and if supported, sending information to the peer device in a data transmission phase according to the obtained quantity of bits that need to be actually carried by the subcarrier.

With reference to the second aspect or the first possible implementation of the second aspect, in a second possible implementation, the subcarrier is a smallest unit carrier for transmitting information on a link connecting to the peer device.

With reference to the second aspect, the first possible implementation of the second aspect, or the second possible implementation of the second aspect, in a third possible implementation, the offset is sent by the peer device by using an O-PMD or R-PMD message.

With reference to the second aspect, the first possible implementation of the second aspect, the second possible implementation of the second aspect, or the third possible implementation of the second aspect, in a fourth possible implementation, the receiving an offset sent by a peer device includes receiving subcarrier group information and an offset of each group that are sent by the peer device, where the offset of each group indicates an offset of all subcarriers in each group.

According to a third aspect, an embodiment of the present invention provides a network transmit device, where the network transmit device includes an offset obtaining unit 401 and a transmit unit 403;
the offset obtaining unit 401 is configured to select an offset according to a maximum quantity of bits that a subcarrier is capable of carrying, where a difference between the maximum quantity of bits that the subcarrier is capable of carrying and the selected offset is greater than 0 and less than or equal to 15; and
the transmit unit 403 is configured to obtain a difference by subtracting the offset from a quantity of bits that need to be actually carried by the subcarrier, and if the difference is not less than 0, send the difference to a peer device as a value b, send the offset to the peer device, and instruct the peer device to obtain, according to the value b and the offset, the quantity of bits that need to be actually carried by the subcarrier.

In a first possible implementation of the third aspect, the offset obtaining unit 401 selects, within a value range less than or equal to the maximum quantity of bits that the subcarrier is capable of carrying, a value as the offset, or obtains the offset according to a preset mapping table between a maximum quantity of bits that each subcarrier is capable of carrying and an offset.

With reference to the third aspect or the first possible implementation of the third aspect, in a second possible implementation, the transmit unit 403 is further configured to use, according to a requirement of the ITU-T G.993.2, four bits to represent the value b in a message field used for configuration of a table b, and send the value b to the peer device.

With reference to the third aspect, the first possible implementation of the third aspect, or the second possible implementation of the third aspect, in a third possible implementation, the offset obtaining unit 401 is further configured to group all subcarriers in a transmission direction according to the maximum quantity of bits that the subcarrier is capable of carrying, so as to ensure that subcarriers in each group can use a same offset; and the transmit unit 403 further sends group information obtained by grouping all the subcarriers and the offset of each group to the peer device.

With reference to the third aspect, the first possible implementation of the third aspect, the second possible implementation of the third aspect, or the third possible implementation of the third aspect, in a fourth possible implementation, the network transmit device 400 is a CPE or a CO, and correspondingly, the transmit unit 403 is a transmitter of the CPE or CO. According to a fourth aspect, an embodiment of the present invention provides a network receive device, where the network transmit device includes a receive unit 501 and an offset processing unit 503;
the receive unit 501 is configured to receive an offset sent by a peer device; and receive a message including a value b sent by the peer device, where the value b is a value that is represented by four bits and that indicates a quantity of bits that need to be carried by a subcarrier; and
the offset processing unit 503 is configured to, when it is identified that the value b in the message is not 0, use a sum of the value b and the offset as a quantity of bits that need to be actually carried by the subcarrier, and when it is identified that the value b is 0, use the value b as the quantity of bits that need to be actually carried by the subcarrier.

In a first possible implementation of the fourth aspect, the receive unit 501 is further configured to receive subcarrier group information and an offset of each group that are sent by the peer device, where the offset of each group indicates an offset of all subcarriers in each group.

With reference to the fourth aspect or the first possible implementation of the fourth aspect, in a second possible implementation, the offset processing unit 503 is further configured to determine whether the obtained quantity of bits that need to be actually carried by the subcarrier is supported by the network receive device; and if supported, send information to the peer device in a data transmission phase according to the obtained quantity of bits that need to be actually carried by the subcarrier.

With reference to the fourth aspect, the first possible implementation of the fourth aspect, or the second possible implementation of the fourth aspect, in a third possible implementation, the offset processing unit 503 determines all the subcarriers in each group by identifying a start subcarrier and an end subcarrier of each group in the group information.

With reference to the fourth aspect, the first possible implementation of the fourth aspect, the second possible implementation of the fourth aspect, or the third possible implementation of the fourth aspect, in a fourth possible implementation, the network receive device is a CPE or a CO, and correspondingly, the receive unit 501 is a receiver of the CPE or the CO. According to a fourth aspect, an embodiment of the present invention provides a network system, including a network-side device and a user-side device, where the network-side device is the foregoing network transmit device, and the user-side device is the foregoing receive device; or the user-side device is the foregoing network transmit device, and the network-side device is the foregoing network receive device.

The solutions described in the embodiments can not only be compatible with an existing mode in which only four bits are used to represent a quantity of bits carried by a subcarrier, but also implement a mode of carrying more than 15 bits by the subcarrier. Therefore, a subcarrier carrying capability supported by a device can be used to a maximum extent. This helps a sender to send data quickly or a receiver to read information quickly, and can greatly improve a system processing rate.

### BRIEF DESCRIPTION OF DRAWINGS

FIG. 1 is a schematic diagram of connecting a CPE and a CO in a DSL network;
FIG. 2 is a schematic flowchart of a method according to an embodiment of the present invention;

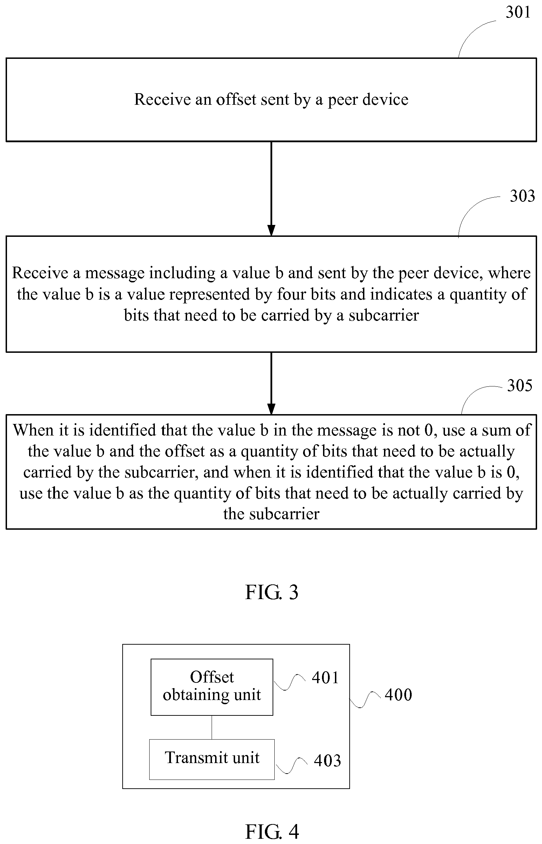

FIG. 3 is a schematic flowchart of a method according to another embodiment of the present invention;
FIG. 4 is a schematic structural diagram of an apparatus according to an embodiment of the present invention;
FIG. 5 is a schematic structural diagram of an apparatus according to another embodiment of the present invention;
FIG. 6 is a schematic structural diagram of a system according to an embodiment of the present invention; and
FIG. 7 is a schematic structural diagram of a general-purpose network component according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Information is transferred by using a subcarrier between a CO and a CPE. Currently, four bits are used to represent a quantity of bits carried by each subcarrier, and may be used to represent any value between 0 and 15. An offset (offset) is introduced in the present invention and is combined with the four bits to represent a value greater than 15. In this way, *b̂* =b+offset, where *b̂* represents a quantity of bits that need to be actually carried by the subcarrier, b represents a value represented by four bits, and offset is the offset. However, when b=0, there is no offset. Table 1 shows a correspondence between b and *b̂* when the offset=2.

**Table 1 Correspondence between b and b̂ when the offset=2**

| **b** | **Offset (offset)** | *b̂* |
|---|---|---|
| 0 | 2 | 0 |
| 1 | 2 | 3 |
| 2 | 2 | 4 |
| ⋮ | ⋮ | ⋮ |
| 15 | 2 | 17 |

In a case of offset=k, the correspondence between b and *b̂* is shown in Table 2. When the offset is 0, it indicates that there is no offset, and a maximum quantity of bits that the subcarrier is capable of carrying is 15; when the offset is 1, the maximum quantity of bits that the subcarrier is capable of carrying is 16. Likewise, when the offset is k, the maximum quantity of bits that the subcarrier is capable of carrying is k+15.

**Table 2 Values of b corresponding to different offsets**

| **Value range of b** | **Offset (offset)** | **Value range of** *b̂* |
|---|---|---|
| [0, 1, 2, ..., 15] | 0 | [0, 1, 2, ..., 15] |
| [0, 1, 2, ..., 15] | 1 | [0, 2, 3, ..., 16] |
| [0, 1, 2, ..., 15] | 2 | [0, 3, 4, ..., 17] |
| [0, 1, 2, ..., 15] | 3 | [0, 4, 5, ..., 18] |
| ⋮ | ⋮ | ⋮ |
| [0, 1, 2, ..., 15] | k | [0, k+1, k+2, ..., k+15] |

The value b (represented by four bits) is used to configure a message for a table b according to the ITU-T G.993.2 standard; then, the message is sent to a peer device, and the offset is also sent to the peer device by using another message, so that the peer device can obtain, based on the offset, a quantity of bits that can be carried by each subcarrier, and normally process received message. Generally, a receive device in a direction (uplink or downlink) notifies a transmit device of a subcarrier processing capability of the receive device in advance. This specifically includes: For an offset of an uplink subcarrier of a CPE, a CO may send, to the CPE, the offset along with a message for configuring an uplink table b, or send the offset either before or after a message for configuring an uplink table b; this is acceptable as long as determining the value *b̂* by the CPE is not affected. For an offset of a downlink subcarrier of the CO, the CPE may send, to the CO, the offset along with a message for configuring a downlink table b, or send the offset either before or after a message for configuring a downlink table b; this is acceptable as long as determining the value *b̂* by the CO is not affected.

It should be noted that a message for configuring a table b and an offset may be transferred in a link initialization phase. Though a maximum quantity of bits that a subcarrier is capable of carrying between devices at both ends has not been determined in the link initialization phase, in the initialization phase, it is agreed that each subcarrier carries only two bits of information, which definitely does not exceed a carrying capability of the subcarrier between the devices at both ends, and therefore, the information can be sent and received normally. More specifically, for the uplink table b, the offset may be set in an O-PMD message in the initialization phase and sent to the CPE; for the downlink table b, the offset may be set in an R-PMD message in the initialization phase and sent to the CO.

Additionally, after separately obtaining the table b and the offset, the devices at both ends enter a data transmission phase (namely, a showtime phase) according to a negotiated subcarrier carrying capability. In the data transmission phase, if the table b needs to be modified, a new offset value may also be sent in the foregoing manner when a new table b is sent; afterward, the devices at both ends transmit data according to a subcarrier carrying capability that is determined according to the new table b and the new offset.

An embodiment of the present invention provides a subcarrier information indicating method, including:
Step 201: Select an offset according to a maximum quantity of bits that a subcarrier is capable of carrying, where a difference between the maximum quantity of bits that the subcarrier is capable of carrying and the selected offset is greater than 0 and less than or equal to 15.

For example, if the maximum quantity of bits that the subcarrier is capable of carrying is 17, any one of values 2 to 16 may be selected as the offset.

Step 203: Obtain a difference by subtracting the offset from a quantity of bits that need to be actually carried by the subcarrier, and if the difference is not less than 0, send the difference to a peer device as a value b.

Step 205: Send the offset to the peer device, and instruct the peer device to obtain, according to the value b and the offset, the quantity of bits that need to be actually carried by the subcarrier.

The subcarrier is a smallest unit carrier for transmitting information on a link connecting to the peer device.

Further, the selecting an offset includes: selecting, within a value range less than or equal to the maximum quantity of bits that the subcarrier is capable of carrying, a value as the offset, or obtaining the offset according to a preset mapping table between a maximum quantity of bits that each subcarrier is capable of carrying and an offset, so that the difference between the maximum quantity of bits that the subcarrier is capable of carrying and the selected offset is greater than 0 and less than or equal to 15.

The offset may be 0 or another natural number.

Still further, after step 205, the method further includes: if the peer device also supports the obtained quantity of bits that need to be actually carried by the subcarrier, sending information in a data transmission phase according to the obtained quantity of bits that need to be actually carried by the subcarrier.

Further, according to a requirement of the ITU-T G.993.2, four bits are used to represent the value b in a message field used for configuration of a table b.

Still further, the offset may be set in an O-PMD or R-PMD message and sent to the peer device.

The method may be performed in a link initialization phase and/or in the data transmission phase.

According to the method, a larger quantity of bits can be sent by a subcarrier on a premise that a message format for exchanging table b information between a sender and a receiver keeps unchanged. This helps a sender to send data quickly and a receiver to read a message quickly, and can greatly improve a system processing rate.

Further, grouping (grouping) all subcarriers in a transmission direction (an uplink direction or downlink direction) according to the maximum quantity of bits that the subcarrier is capable of carrying, so as to ensure that subcarriers in each group (group) can use a same offset. In this case, the offset of all the subcarriers in each group is the same, and referred to as a group offset.

Further, the sending the offset to the peer device includes: sending group information obtained by grouping all the subcarriers and the offset of each group to the peer device, to ensure that maximum quantities of bits that the subcarriers in each group are capable of carrying are the same.

The group information may be represented by using a start subcarrier and an end subcarrier of each group.

Specifically, one offset may be set for each group in a configuration message. Two parameters need to be used: one parameter is an offset; the other parameter indicates a group corresponding to the offset and specifically, may be identified by using the start subcarrier and the end subcarrier of each group. For multiple groups, the start subcarriers and the end subcarriers of groups can be arranged in order or according to another rule, and corresponding offsets of the groups are also arranged according to a corresponding rule. A string representing the two parameters is variable in length.

In this way, according to this embodiment, when receiving a message configured with the two parameters, a peer end can obtain a quantity of bits that can be carried by subcarriers in each group and can normally process received information.

The following uses downlink as an example for description. Assume that all downlink subcarriers are divided into three groups: Group1, Group2, and Group3. A local device obtains through calculation that a maximum quantity of bits that all subcarriers in Group₁ are capable of carrying is 18, and then offset₁=3; a maximum quantity of bits that all subcarriers in Group₂ are capable of carrying is 17, and then offset₂=2; a maximum quantity of bits that all subcarriers in Groups are capable of carrying is 15, and then offset₃=0.

A downstream max bit tone groups (Downstream Max Bit tone groups) field and a downstream max bit offset (Downstream Max Bit Offset) field are added to the R-PMD message, where in the downstream max bit tone groups field, a quantity of groups is represented by using one byte (8 bits), and the start and end subcarriers of each group are represented by using three bytes (24 bits). Configuration may be performed as follows:

| **Quantity of bytes** | **Content** |
|---|---|
| 1 | Group quantity |
| 3 | Bits 0-11: Start subcarrier of the downlink Group 1 |
| | Bits 12-23: End subcarrier of the downlink Group 1 |
| 3 | Bits 0-11: Start subcarrier of the downlink Group2 |
| | Bits 12-23: End subcarrier of the downlink Group2 |
| 3 | Bits 0-11: Start subcarrier of the downlink Group3 |
| | Bits 12-23: End subcarrier of the downlink Group3 |

Downstream max bit offset may be converted to binary values (separately represented by two bits) according to the offsets of the three groups, and then be arranged in descending order as [00 10 11], where 11 indicates a value of offset₁, 10 indicates a value of offset₂, and 00 indicates a value of offsets.

The local device sends R-PMD added with the downstream max bit tone groups field and the downstream max bit offset field to the peer end. After receiving the R-PMD message, the peer end can determine an offset corresponding to the subcarriers in each group. Processing in the uplink direction is similar to the foregoing method, except that a setting and processing object in the foregoing method is changed to an uplink subcarrier. In the foregoing embodiment, the quantity of bytes used for representing the group quantity, the start and end subcarriers of each group, and the offset may be other values, and implementation of the present invention are not affected, as long as the foregoing parameters can be clearly represented, and can be normally identified by the sender and the receiver.

Different offsets may be set between groups, and an offset may be separately set for subcarriers with a different carrying capability according to a group. Therefore, offsets are set more flexibly. For example, according to a relationship in table 2, when an offset of a group of subcarriers is k, it may indicate that a quantity of bits that need to be actually carried by the subcarriers is in a range of [0, k+1, k+2, ..., k+15]; when an offset of a group of subcarriers is k-1, it may indicate that a quantity of bits that need to be actually carried by the subcarriers is in a range of [0, k+1, k+2, ..., k+14]. With reference to an exception scenario in step 203, if the difference obtained by subtracting the offset from the quantity of bits that need to be actually carried by the subcarrier is less than 0, the carrier may be assigned to another group and be set to another offset, so as to ensure that the difference obtained by subtracting the offset from the quantity of bits that need to be actually carried by the subcarrier is not less than 0, and processing may be continued in a manner of steps 203 and 205.

An embodiment of the present invention provides a subcarrier information processing method, where the method includes:
Step 301: Receive an offset sent by a peer device.

Step 303: Receive a message including a value b and sent by the peer device, where the value b is a value represented by four bits and indicates a quantity of bits that need to be carried by a subcarrier.

Step 305: When it is identified that the value b in the message is not 0, use a sum of the value b and the offset as a quantity of bits that need to be actually carried by the subcarrier, and when it is identified that the value b is 0, use the value b as the quantity of bits that need to be actually carried by the subcarrier.

The subcarrier is a smallest unit carrier for transmitting information on a link connecting to the peer device.

The offset may be 0 or another natural number.

Further, after step 305, the method further includes: determining whether the obtained quantity of bits that need to be actually carried by the subcarrier is supported; and if supported, sending information to the peer device in a data transmission phase according to the obtained quantity of bits that need to be actually carried by the subcarrier.

Further, the offset is sent by the peer device by using an O-PMD or R-PMD message.

Still further, the receiving an offset sent by a peer device includes receiving subcarrier group information and an offset of each group that are sent by the peer device, where the offset of each group indicates an offset of all subcarriers in each group.

All the subcarriers in each group are determined by identifying a start subcarrier and an end subcarrier of each group in the group information.

The method may be performed in a link initialization phase and/or in the data transmission phase.

An embodiment of the present invention further provides a network transmit device 400, where the network transmit device includes an offset obtaining unit 401 and a transmit unit 403.

The offset obtaining unit 401 is configured to select an offset according to a maximum quantity of bits that a subcarrier is capable of carrying, where a difference between the maximum quantity of bits that the subcarrier is capable of carrying and the selected offset is greater than 0 and less than or equal to 15.

The transmit unit 403 is configured to obtain a difference by subtracting the offset from a quantity of bits that need to be actually carried by the subcarrier, and if the difference is not less than 0, send the difference to a peer device as a value b, send the offset to the peer device, and instruct the peer device to obtain, according to the value b and the offset, the quantity of bits that need to be actually carried by the subcarrier.

The subcarrier is a smallest unit carrier for transmitting information on a link between the network transmit device 400 and the peer device.

Further, the offset obtaining unit 401 selects, within a value range less than or equal to the maximum quantity of bits that the subcarrier is capable of carrying, a value as the offset, or obtains the offset according to a preset mapping table between a maximum quantity of bits that each subcarrier is capable of carrying and an offset. The offset may be 0 or another natural number.

Still further, the transmit unit 403 is further configured to use, according to a requirement of the ITU-T G.993.2, four bits to represent the value b in a message field used for configuration of a table b, and send the value b to the peer device.

Further, the offset obtaining unit 401 is configured to group all subcarriers in a transmission direction according to the maximum quantity of bits that the subcarrier is capable of carrying, so as to ensure that subcarriers in each group can use a same offset. In this case, the offset of all the subcarriers in each group is the same, and referred to as a group offset.

Further, the transmit unit 403 sends group information obtained by grouping all the subcarriers and the offset of each group to the peer device.

Still further, the network transmit device 400 is a CPE or a CO, and correspondingly, the transmit unit 403 is a transmitter of the CPE or the CO.

It should be further noted that specific actions of the offset obtaining unit 401 and the transmit unit 403 in the network transmit device 400 are the method in the foregoing method embodiments, and specific steps are not described again.

An embodiment of the present invention provides a network receive device 500, where the network transmit device 500 includes a receive unit 501 and an offset processing unit 503. The receive unit 501 is configured to receive an offset sent by a peer device; and receive a table b configuration message sent by the peer device, where the value b is a value that is represented by four bits and that indicates a quantity of bits that need to be carried by a subcarrier.

The offset processing unit 503 is configured to, when it is identified that the value b in the message is not 0, use a sum of the value b and the offset as a quantity of bits that need to be actually carried by the subcarrier, and when it is identified that the value b is 0, use the value b as the quantity of bits that need to be actually carried by the subcarrier.

The subcarrier is a smallest unit carrier for transmitting information on a link between the network transmit device 400 and the peer device.

The offset may be 0 or another natural number.

Further, the offset is sent by the peer device by using an O-PMD or R-PMD message.

Still further, the receive unit 501 is further configured to receive subcarrier group information and an offset of each group that are sent by the peer device, where the offset of each group indicates an offset of all subcarriers in each group.

Still further, the offset processing unit 503 is further configured to determine whether the obtained quantity of bits that need to be actually carried by the subcarrier is supported by the network receive device 500; and if supported, send information to the peer device in a data transmission phase according to the obtained quantity of bits that need to be actually carried by the subcarrier.

Still further, the offset processing unit 503 determines all the subcarriers in each group by identifying a start subcarrier and an end subcarrier of each group in the group information. The network receive device 500 is a CPE or a CO, and correspondingly, the receive unit 501 is a receiver of the CPE or the CO.

It should be further noted that specific actions of the receive unit and the offset processing unit in the network receive device 500 are the method in the foregoing method embodiments, and specific steps are not described again.

An embodiment of the present invention also provides a network system 600, including a network-side device 601 and a user-side device 603.

The network-side device 601 is the network transmit device in the foregoing embodiments, and correspondingly, the user-side device 603 may be the network receive device in the foregoing embodiments. Alternatively, the network-side device 601 is the network receive device in the foregoing embodiments, and correspondingly, the user-side device 603 may be the network transmit device in the foregoing embodiments.

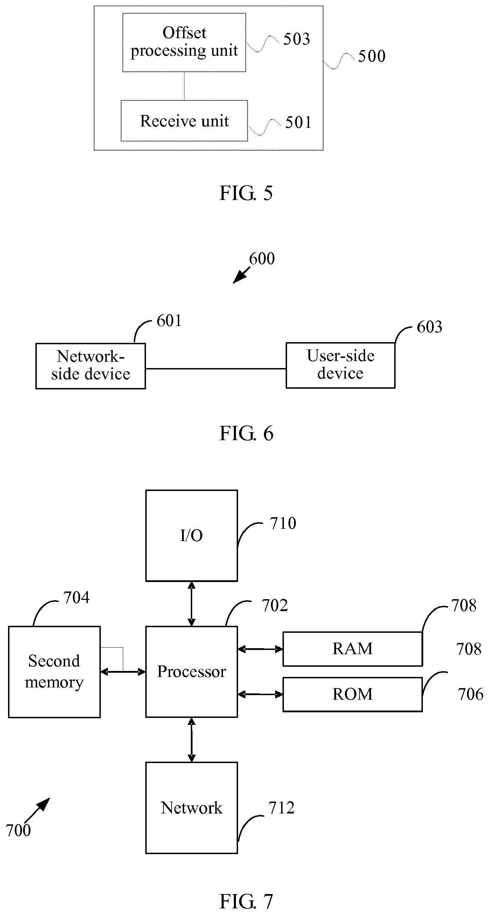

A person of ordinary skill in the art may understand that all or some steps of the method according to the embodiments may be implemented by a program instructing relevant hardware. The program may be stored in a computer readable storage medium. When the program runs, the steps of the method according to the embodiments are performed. The storage medium may be any medium capable of storing program code, such as a ROM, a RAM, a magnetic disk, or an optical disc. Specifically, the network processing process described above may be implemented on common components, such as computers or network components having sufficient processing capabilities, memory resources, and network throughput capabilities. FIG. 7 schematically illustrates an electrical general-purpose network component 700 that is applicable for implementing one or more embodiments of the components disclosed in the specification. The network component 700 includes a processor 702 (which may be referred to as a central processing unit or CPU). The processor 702 communicates with a storage device, including a second memory 704, a read only memory (ROM) 706, a random access memory (RAM) 708, an input/output (I/O) device 710, and a network connectivity device 712. The processor 702 may be implemented as one or more CPU chips, or may be implemented as a part of one or more application-specific integrated circuits.

The second memory 704 is typically composed of one or more disk drives or disc drives and is configured to perform nonvolatile storage of data and, if the RAM 708 is insufficient to accommodate all of the work data, is used as an overflow data storage device. The second memory 704 may be configured to store programs that are loaded into the RAM 708 when being selected for execution, the ROM 706 is configured to store an instruction and/or data read during program execution, the ROM 706 is a nonvolatile storage device and typically has a relatively small memory capacity compared with a relatively large memory capacity of the second memory 704. The RAM 708 is configured to store volatile data and may store an instruction. Access to the ROM 706 and RAM 708 is generally faster than access to the second memory 704.

Further embodiments of the present invention are provided in the following. It should be noted that the numbering used in the following section does not necessarily need to comply with the numbering used in the previous sections.
Embodiment 1. A subcarrier information indicating method, wherein the method comprises:
   selecting an offset according to a maximum quantity of bits that a subcarrier is capable of carrying, wherein a difference between the maximum quantity of bits that the subcarrier is capable of carrying and the selected offset is greater than 0 and less than or equal to 15;
   obtaining a difference obtained by subtracting the offset from a quantity of bits that need to be actually carried by the subcarrier, and if the difference is not less than 0, sending the difference to a peer device as a value b; and
   sending the offset to the peer device, and instructing the peer device to obtain, according to the value b and the offset, the quantity of bits that need to be actually carried by the subcarrier.
Embodiment 2. The method according to claim 1, wherein the selecting an offset comprises: selecting, within a value range less than or equal to the maximum quantity of bits that the subcarrier is capable of carrying, a value as the offset, or obtaining the offset according to a preset mapping table between a maximum quantity of bits that each subcarrier is capable of carrying and an offset.
Embodiment 3. The method according to claim 1 or 2, wherein according to a requirement of the ITU-T G.993.2, four bits are used to represent the value b in a message field used for configuration of a table b.
Embodiment 4. The method according to claim 1, 2, or 3, wherein the subcarrier is a smallest unit carrier for transmitting information on a link connecting to the peer device.
Embodiment 5. The method according to any one of claims 1 to 4, wherein the sending the offset to the peer device comprises: grouping all subcarriers in a transmission direction according to the maximum quantity of bits that the subcarrier is capable of carrying, so as to ensure that subcarriers in each group can use a same offset; and sending group information obtained by grouping all the subcarriers and the offset of each group to the peer device. Embodiment 6. A subcarrier information processing method, wherein the method comprises:
   receiving an offset sent by a peer device;
   receiving a message comprising a value b and sent by the peer device, wherein the value b is a value represented by four bits and indicates a quantity of bits that need to be carried by a subcarrier; and
   when it is identified that the value b in the message is not 0, using a sum of the value b and the offset as a quantity of bits that need to be actually carried by the subcarrier, and when it is identified that the value b is 0, using the value b as the quantity of bits that need to be actually carried by the subcarrier.
Embodiment 7. The method according to claim 6, wherein the method further comprises: determining whether the obtained quantity of bits that need to be actually carried by the subcarrier is supported; and if supported, sending information to the peer device in a data transmission phase according to the obtained quantity of bits that need to be actually carried by the subcarrier.
Embodiment 8. The method according to claim 6 or 7, wherein the subcarrier is a smallest unit carrier for transmitting information on a link connecting to the peer device. Embodiment 9. The method according to claim 6, 7, or 8, wherein the offset is sent by the peer device by using an O-PMD or R-PMD message.
Embodiment 10. The method according to any one of claims 6 to 9, wherein the receiving an offset sent by a peer device comprises receiving subcarrier group information and an offset of each group that are sent by the peer device, wherein the offset of each group indicates an offset of all subcarriers in each group.
Embodiment 11. A network transmit device, wherein the network transmit device comprises an offset obtaining unit 401 and a transmit unit 403;
   the offset obtaining unit 401 is configured to select an offset according to a maximum quantity of bits that a subcarrier is capable of carrying, wherein a difference between the maximum quantity of bits that the subcarrier is capable of carrying and the selected offset is greater than 0 and less than or equal to 15; and
   the transmit unit 403 is configured to obtain a difference by subtracting the offset from a quantity of bits that need to be actually carried by the subcarrier, and if the difference is not less than 0, send the difference to a peer device as a value b, send the offset to the peer device, and instruct the peer device to obtain, according to the value b and the offset, the quantity of bits that need to be actually carried by the subcarrier.
Embodiment 12. The network transmit device according to claim 11, wherein the offset obtaining unit 401 selects, within a value range less than or equal to the maximum quantity of bits that the subcarrier is capable of carrying, a value as the offset, or obtains the offset according to a preset mapping table between a maximum quantity of bits that each subcarrier is capable of carrying and an offset.
Embodiment 13. The network transmit device according to claim 11 or 12, wherein the transmit unit 403 is further configured to use, according to a requirement of the ITU-T G.993.2, four bits to represent the value b in a message field used for configuration of a table b, and send the value b to the peer device.
Embodiment 14. The network transmit device according to claim 11, 12, or 13, wherein the offset obtaining unit 401 is further configured to group all subcarriers in a transmission direction according to the maximum quantity of bits that the subcarrier is capable of carrying, so as to ensure that subcarriers in each group can use a same offset; and the transmit unit 403 further sends group information obtained by grouping all the subcarriers and the offset of each group to the peer device.
Embodiment 15. The network transmit device according to any one of claims 11 to 14, wherein the network transmit device 400 is a customer premises equipment or a central office device, and correspondingly, the transmit unit 403 is a transmitter of the customer premises equipment or central office device.
Embodiment 16. A network receive device, wherein the network transmit device comprises a receive unit 501 and an offset processing unit 503;
   the receive unit 501 is configured to receive an offset sent by a peer device; and receive a message comprising a value b sent by the peer device, wherein the value b is a value that is represented by four bits and that indicates a quantity of bits that need to be carried by a subcarrier; and
   the offset processing unit 503 is configured to, when it is identified that the value b in the message is not 0, use a sum of the value b and the offset as a quantity of bits that need to be actually carried by the subcarrier, and when it is identified that the value b is 0, use the value b as the quantity of bits that need to be actually carried by the subcarrier.
Embodiment 17. The network receive device according to claim 16, wherein the receive unit 501 is further configured to receive subcarrier group information and an offset of each group that are sent by the peer device, wherein the offset of each group indicates an offset of all subcarriers in each group.
Embodiment 18. The network receive device according to claim 16 or 17, wherein the offset processing unit 503 is further configured to determine whether the obtained quantity of bits that need to be actually carried by the subcarrier is supported by the network receive device; and if supported, send information to the peer device in a data transmission phase according to the obtained quantity of bits that need to be actually carried by the subcarrier. Embodiment 19. The network receive device according to claim 16, 17, or 18, wherein the offset processing unit 503 determines all the subcarriers in each group by identifying a start subcarrier and an end subcarrier of each group in the group information.
Embodiment 20. The network receive device according to any one of claims 16 to 19, wherein the network receive device is a customer premises equipment or a central office device, and correspondingly, the receive unit 501 is a receiver of the CPE customer premises equipment or central office device.
Embodiment 21. A network system, comprising a network-side device and a user-side device, wherein the network-side device is the network transmit device according to any one of claims 10 to 15, and the user-side device is the network receive device according to any one of claims 16 to 20; or the user-side device is the network transmit device according to any one of claims 10 to 15, and the network-side device is the network receive device according to any one of claims 16 to 20.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A subcarrier information indicating method, **characterized in that** the method comprises:
selecting an offset according to a maximum quantity of bits that a subcarrier is capable of carrying, wherein a difference between the maximum quantity and the selected offset is greater than 0 and less than or equal to 15 (step 201);
obtaining a difference by subtracting the offset from a quantity of bits that need to be actually carried by the subcarrier, and if the difference is not less than 0, sending in a message the difference to a peer device as a value b being represented by four bits (step 203); and
sending the offset to the peer device (step 205);
wherein the value b and the offset is used to obtain, by the peer device, the quantity of bits that need to be actually carried by the subcarrier.

2. The method according to claim 1, wherein the selecting an offset comprises: selecting, within a value range less than or equal to the maximum quantity, a value as the offset, or obtaining the offset according to a preset mapping table between a maximum quantity of bits that each subcarrier is capable of carrying and an offset.

3. The method according to claim 1 or 2, wherein the subcarrier is a smallest unit carrier for transmitting information on a link connecting to the peer device.

4. The method according to any one of claims 1 to 3, wherein the sending the offset to the peer device comprises: grouping all subcarriers in a transmission direction according to the maximum quantity, so as to ensure that subcarriers in each group can use a same offset; and sending group information obtained by grouping all the subcarriers and the offset of each group to the peer device.

5. A subcarrier information processing method, **characterized in that** the method comprises:
receiving an offset (step 301);
receiving a message comprising a value b, wherein the value b is a value represented by four bits and indicates a quantity of bits that need to be carried by a subcarrier (step 303); and
when the value b in the message is not 0, using a sum of the value b and the offset as a quantity of bits that need to be actually carried by the subcarrier, and when the value b is 0, using the value b as the quantity of bits that need to be actually carried by the subcarrier (step 305).

6. The method according to claim 5, wherein the method further comprises: determining whether the obtained quantity of bits that need to be actually carried by the subcarrier is supported; and if supported, sending information to a peer device in a data transmission phase according to the obtained quantity of bits that need to be actually carried by the subcarrier.

7. The method according to claim 5 or 6, wherein the subcarrier is a smallest unit carrier for transmitting information on a link connecting to a peer device.

8. The method according to claim 5, 6, or 7, wherein the offset is received within an O-PMD or R-PMD message based on ITU-T G.993.2.

9. The method according to any one of claims 5 to 8, wherein the receiving the offset sent by the peer device comprises: receiving subcarrier group information and an offset of each group that are sent by the peer device, wherein the offset of each group indicates an offset of all subcarriers in each group.

10. A network transmit device (400), **characterized by** comprising:
means for selecting an offset according to a maximum quantity of bits that a subcarrier is capable of carrying, wherein a difference between the maximum quantity and the selected offset is greater than 0 and less than or equal to 15 (step 201);
means for obtaining a difference between the offset and a quantity of bits that need to be actually carried by the subcarrier, and if the difference is not less than 0, sending in a message the difference to a peer device as a value b being represented by four bits (step 203); and
means for sending the offset to the peer device (step 205); wherein the value b and the offset is used to obtain, by the peer device, the quantity of bits that need to be actually carried by the subcarrier.

11. The network transmit device according to claim 10, further comprising:
mean for selecting, within a value range less than or equal to the maximum quantity, a value as the offset, or obtaining the offset according to a preset mapping table between a maximum quantity of bits that each subcarrier is capable of carrying and an offset.

12. The network transmit device according to claim 10 or 11, further comprising: means for grouping all subcarriers in a transmission direction according to the maximum quantity, so as to ensure that subcarriers in each group can use a same offset; and sending group information obtained by grouping all the subcarriers and the offset of each group to the peer device.

13. A network receive device (500), **characterized by** comprising:
means for receiving an offset (step 301);
means for receiving a message comprising a value b, wherein the value b is a value represented by four bits and indicates a quantity of bits that need to be carried by a subcarrier (step 303); and
means for, when the value b in the message is not 0, using a sum of the value b and the offset as a quantity of bits that need to be actually carried by the subcarrier, and when the value b is 0, using the value b as the quantity of bits that need to be actually carried by the subcarrier (step 305).

14. The network receive device according to claim 13, further comprising:
means for determining whether the obtained quantity of bits that need to be actually carried by the subcarrier is supported; and if supported, sending information to a peer device in a data transmission phase according to the obtained quantity of bits that need to be actually carried by the subcarrier.

15. The network receive device according to claim 13 or 14, further comprising: mean for receiving subcarrier group information and an offset of each group that are sent by a peer device, wherein the offset of each group indicates an offset of all subcarriers in each group.
